# EUROPÄISCHE PATENTSCHRIFT

(11) **EP 0 955 809 B1**
(45) Veröffentlichungstag und Bekanntmachung des Hinweises auf die Patenterteilung: **15.05.2002**
(21) Anmeldenummer: 98904145.4
(22) Anmeldetag: 04.02.1998
(51) Int. Cl.: A01N 47/36

(54) **FESTE MISCHUNGEN AUF DER BASIS VON SULFONYLHARNSTOFFEN UND ADJUVANTIEN**
SULPHONYLUREA AND/ADJUVANT BASED SOLID MIXTURES
MELANGES SOLIDES A BASE DE SULFONYLUREES ET ADJUVANTS

(30) Priorität: 05.02.1997 DE 19704276
(43) Veröffentlichungstag der Anmeldung: 17.11.1999
(73) Patentinhaber: BASF AKTIENGESELLSCHAFT, 67056 Ludwigshafen (DE)
(72) Erfinder: BRATZ, Matthias, D-67117 Limburgerhof (DE); JÄGER, Karl-Friedrich, D-67117 Limburgerhof (DE); BERGHAUS, Rainer, D-67346 Speyer (DE)
(86) Internationale Anmeldenummer: EP9800413
(87) Internationale Veröffentlichungsnummer: WO9834482

(56) Entgegenhaltungen:
- EP-A- 0 367 887
- EP-A- 0 764 404
- WO-A-90/00007
- WO-A-91/04666
- DATABASE WPI Section Ch, Week 8721 Derwent Publications Ltd., London, GB; Class C02, AN 87-146807 XP002067319 & JP 62 084 004 A (KUMIAI CHEM IND CO LTD) in der Anmeldung erwähnt
- DATABASE WPI Section Ch, Week 9346 Derwent Publications Ltd., London, GB; Class C03, AN 93-365099 XP002067320 & JP 05 271 021 A (ISHIHARA SANGYO KAISHA LTD)

## Beschreibung

Die vorliegende Erfindung betrifft feste Mischungen auf der Basis von Sulfonylharnstoffen und Adjuvantien.

Sulfonylharnstoffe (im folgenden mit "SU" bezeichnet) sind eine Gruppe von hochaktiven Herbiziden, die in weiten Bereichen des Pflanzenschutzes Anwendung finden.

Bedingt durch den Mechanismus der Wirkstoffaufnahme über das Blatt kann die Wirkung von SU durch Zusatz oberflächenaktiver Stoffe wie Netzmittel zur Spritzbrühe verbessert werden (vgl. Green et al.,ANPP, Seizieme conference du columa - Journees internationales sur la lutte contre les mauvaises herbes 1995, S. 469-474; "DPX-KG 691 - A new surfactant for sulfonyl urea herbicides").

In der Literatur werden als geeignete Netzmittel u.a. Öl-Adjuvantien (Nalejewa et al., Weed Technol. 1995, 9, S. 689-695) oder Alkoholethoxylate (s.o. sowie Dunne et al., Weed Science 1994, 42, S. 82-85; Green, Weed Technol. 1993, 7, S. 633-640) als besonders geeignet beschrieben. Diese Stoffe werden in der landwirtschaftlichen Praxis als Tank-Mix-Additive vom Landwirt der Spritzbrühe zugesetzt. Dabei wird die Mischung aus SU-Herbizid und oberflächenaktivem Stoff erst kurz vor der Anwendung im Spritztank hergestellt.

Kommerziell erhältlich ist z.B. ein Doppelpack mit dem Handelsnamen CATO® (Du Pont de Nemours), welcher aus einem 25 %igen wasserdispergierbaren Granulat des Wirkstoffs Rimsulfuron (Komponente A) und einem separat abgepackten Netzmittel (Komponente B) bestehend aus einer Mischung aus 2-Butoxyethanol, polyethoxyliertem Tallowamin und Nonylphenylpolyethylenglykolether besteht. Zur Anwendung werden beide Komponenten wie oben beschrieben im Spritztank gemischt.

In der Praxis wäre es wünschenswert, Fertigformulierungen einsetzen zu können, in denen ein wirkungssteigerndes Netzmittel bereits enthalten ist, um die problematische Mischung unmittelbar vor der Anwendung zu vermeiden. Auf diese Weise könnten logistische Probleme und Mischungsfehler beim Ansetzen der Spritzbrühe vermieden werden. Ferner sind Festformulierungen generell aus anwendungstechnischer Sicht bei der Gestaltung und Entsorgung der Verpackungen vorteilhaft.

Aus der Literatur ist weiterhin bekannt, daß Formulierungen, die Sulfonylharnstoffe enthalten, bezüglich der Stabilität der Wirkstoffe problematisch sind, da der Wirkstoff sich unter ungünstigen Bedingungen im Lauf der Zeit zersetzen kann. Die gewünschte herbizide Wirkung ist dann nicht mehr gegeben. Die Tendenz zur Zersetzung ist auch hinsichtlich der Registrierungsanforderungen problematisch, da bei der Registrierung bestimmte Mindestanforderungen an die Stabilität von PS-Wirkstoffen in Formulierungen gestellt werden.

In der JP-A 62/084004 wird die Verwendung von Calciumcarbonat und Natrium-tripolyphosphat zur Stabilisierung von SU-haltigen Formulierungen beschrieben.

Die JP-A 63/023806 beschreibt eine Problemlösung durch Verwendung spezieller Trägerstoffe und Pflanzenöle zur Herstellung fester SU-haltiger Formulierungen. Die JP-A 08/104603 beschreibt ähnliche Effekte bei der Verwendung von epoxydierten natürlichen Ölen. Beide vorstehend genannten Anmeldungen haben als gemeinsames Merkmal die Inkorporation von Pflanzenölen in der Festformulierung, um neben einer verbesserten Stabilität die wirkungssteigernden Effekte dieser als Adjuvantien wirksamen Stoffe zu nutzen.

Bei der Einarbeitung von Pflanzenölen in flüssige Formulierungen (in der Regel Suspensionskonzentrate) werden ähnliche Effekte ausgenutzt (vgl. EP-A 313317 und EP-A 554015).

Aus dem Stand der Technik ist auch bekannt, daß sulfat- oder sulfonathaltige Tenside als Netzmittel/Adjuvantien verwendet werden können.

JP-A-5271021 offenbart feste Formulierungen von Herbiziden wie Sulfonylharnstoffe, Glufosinate, Glyphosate und deren Mischungen, zusammen mit Natrium dioctylsulfosuccinate.

EP-A-367887 offenbart feste herbizide Formulierungen, die Sulfonylharnstoffe und Dispergiermittel wie Na-Ligninsulfonat, Na-laurylsulfat oder Ölsäuremethyltaurid-natrium enthalten.

WO-A-9000007 offenbart feste Formulierungen von Wirkstoffen wie Sulfonylharnstoffe, die Dispergiermittel wie Lignosulfonate und Tenside wie Alkylbenzolsulfonate, Alkyl- und Dialkylnaphthalenesulfonate, Dialkylsulfosuccinate usw. enthalten.

WO-A-9104666 offenbart herbizide Formulierungen, die ein Sulfonylharnstoff zusammen mit anderen Herbiziden enthalten. Die Kombinationen werden mit verschiedenen Zusatzstoffen in verschiedene Weise formuliert, z.B. als benetzbares Pulver mit Ligninsulfonaten, oder als wasserdispergierbare Granulate mit Ligninsulfonaten, Laurylsulfonaten oder andere Tensiden.

In der EP-A 378 895 und der WO92/12637 sind sulfat- oder sulfonathaltige Tenside mit dem Wirkstoff N-Phosphono-Methylglycin in Feststoffformulierungen beschrieben.

In der EP-A 413 267 wird die Verwendung von sulfat- oder sulfonathaltigen Tensiden mit den Wirkstoffen Glufosinate-Ammonium und Fenoxaprop-Ethyl beschrieben.

Aufgabe der vorliegenden Erfindung war es daher, Festformulierungen mit Sulfonylharnstoffen als Wirkstoffen zur Verfügung zu stellen, die Adjuvantien bereits in der Festformulierung enthalten und bisher bekannten Festformulierungen überlegen sind.

Diese Aufgabe wird erfindungsgemäß durch feste Mischungen gelöst, die enthalten
a) einen Sulfonylharnstoff und
b) ein Salz einer Alkylsulfonsäure oder sulfonathaltigen.

Überraschenderweise wurde gefunden, daß bei Verwendung von Salzen der Alkylsulfonsäure als Netzmittel in SU-haltigen Feststoffformulierungen eine ausgeprägte Stabilisierung des Wirkstoffs im Vergleich zu anderen Netzmitteln (z.B. ethoxylierten Fettaminen oder Alkoholethoxylaten) auftritt. Dieser Effekt ist vor allem dann zu beobachten, wenn neben herbiziden Wirkstoffen wasserlösliche anorganische Salze wie Ammoniumsulfat oder Kaliumsulfat vorhanden sind. Besonders deutlich wird die Stabilisierung wenn das Netzmittel in der für die biologische Wirkung erforderlichen Konzentration eingesetzt wird.

Durch Mischung der SU mit anderen Wirkstoffen, sulfat- oder sulfonathaltigen Tensiden und Ammoniumsulfat lassen sich lagerstabile Pertigformulierungen mit guter biologischer Wirkung erhalten.

Weiterhin wurden Verfahren zur Herstellung der erfindungsgemäßen festen Mischungen gefunden sowie deren Verwendung als Pflanzenschutzmittel zur Bekämpfung unerwünschter Schadpflanzen.

Als Sulfonylharnstoff a) kommen generell Verbindungen mit der Struktureinheit 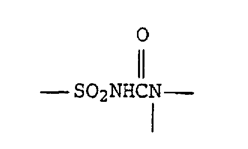 in Betracht.

Bevorzugt werden SU der folgenden Strukturen I: 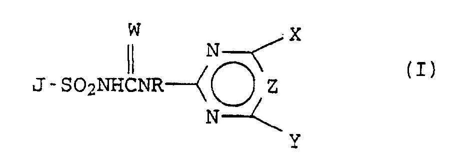 wobei J folgende Bedeutung hat: 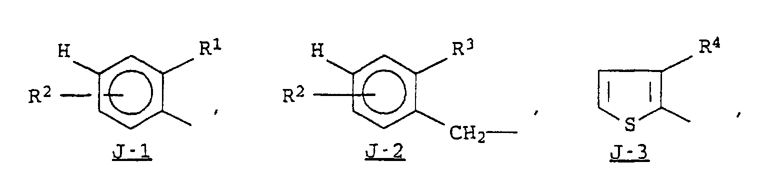 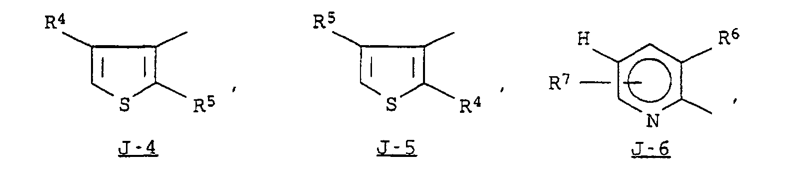 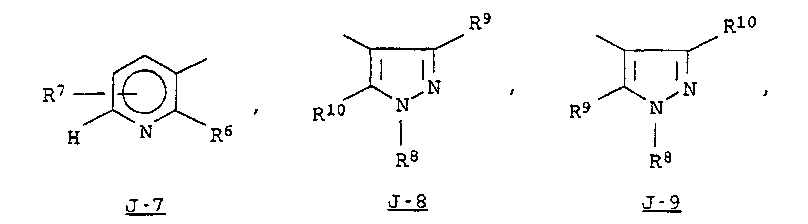 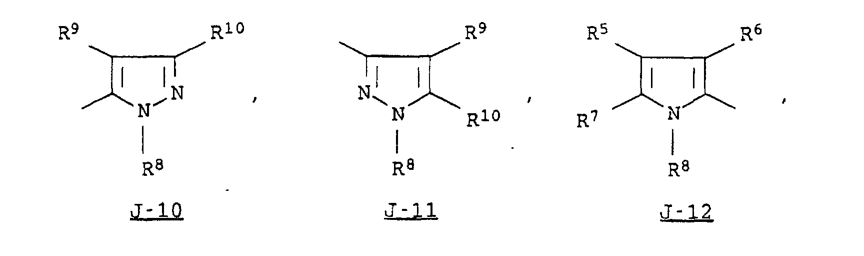 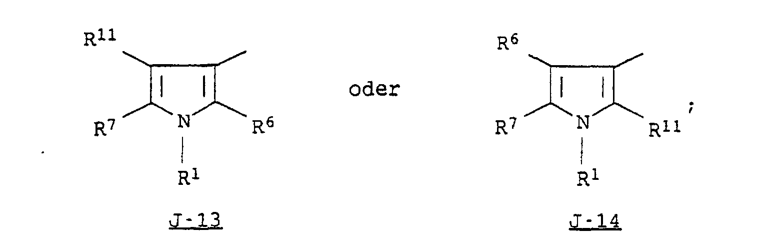 wobei die Substituenten R bis R¹⁸ folgende Bedeutung haben:
- R:: H oder CH₃;
- R¹:: F, Cl, Br, NO₂, C₁-C₄-Alkyl, C₁-C₄-Haloalkyl, C₃-C₄-Cycloalkyl, C₂-C₄ Haloalkenyl, C₁-C₄-Alkoxy, C₁-C₄-Haloalkoxy, C₂-C₄-Alkoxyalkoxy, CO₂R¹², C(O)NR¹³R¹⁴, SO₂NR¹⁵R¹⁶, S(O)ₙR¹⁷, C(O)R¹⁸, CH₂CN oder L;
- R²:: H, F, Cl, Br, CN, CH₃, OCH₃, SCH₃, CF₃ oder OCF₂H;
- R³:: Cl, NO₂, CO₂CH₃, CO₂CH₂CH₃, SO₂N(CH₃)₂, SO₂CH₃, SO₂CH₂CH₃, OCH₃, or OCH₂CH₃;
- R⁴:: C₁-C₃-Alkyl, C₁-C₄-Haloalkyl, C₁-C₄-Alkoxy, C₂-C₄-Haloalkenyl, F, Cl, Br, NO₂, CO₂R¹², C(O)NR¹³R¹⁴, SO₂NR¹⁵R¹⁶, S(O)ₙR¹⁷, C(O)R¹⁸ or L;
- R⁵:: H, F, Cl, Br oder CH₃;
- R⁶:: C₁-C₄-Alkyl, C₁-C₄-Alkoxy, C₂-C₄-Haloalkenyl, F, Cl, Br, CO₂R¹², C(O)NR¹³R¹⁴, SO₂NR¹⁵R¹⁶, S(O)ₙR¹⁷, C(O)R¹⁸ or L;
- R⁷:: H, F, Cl, CH₃ oder CF₃;
- R⁸:: H, C₁-C₄-Alkyl oder Pyridyl;
- R⁹:: ist C₁-C₄-Alkyl, C₁-C₄-Alkoxy, F, Cl, Br, NO₂, CO₂R¹², SO₂NR¹⁵R¹⁶, S(O)ₙR¹⁷, OCF₂H, C(O)R¹⁸, C₂-C₄-Haloalkenyl oder L;
- R¹⁰:: H, Cl, F, Br, C₁-C₄-Alkyl or C₁-C₄-Alkoxy;
- R¹¹:: H, C₁-C₄-Alkyl, C₁-C₄-Alkoxy, C₂-C₄-Alkoxy; Haloalkenyl, F, Cl, Br, CO₂R¹² C(O)NR¹³R¹⁴, SO₂NR¹⁵R¹⁶, S(O)ₙR¹⁷, C(O)R¹⁸ oder L;
- R¹²:: C₁-C₄-Alkyl, ggf. substituiert durch Halogen, C₁-C₄-Alkoxy or CN, Allyl oder Propargyl;
- R¹³:: H, C₁-C₄-Alkyl oder C₁-C₄-Alkoxy;
- R¹⁴:: C₁-C₄-Alkyl;
- R¹⁵:: H, C₁-C₄-Alkyl, C₁-C₄-Alkoxy, Allyl oder Cyclopropyl;
- R¹⁶:: H oder C₁-C₄-Alkyl;
- R¹⁷:: C₁-C₄-Alkyl, C₁-C₄ Haloalkyl, Allyl oder Propargyl;
- R¹⁸:: C₁-C₄-Alkyl, C₁-C₄-Haloalkyl or C₃-C₅-Cycloalkyl, ggf. substituiert durch Halogen;
- n: 0,1 oder 2 ist;
- L: die Struktur II 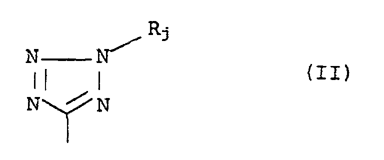
hat, wobei
- Rⱼ:: H oder C₁-C₃ Alkyl;
- W:: O oder S;
- X:: H, C₁-C₄-Alkyl, C₁-C₄-Alkoxy, C₁-C₄-Haloalkoxy, C₁-C₄-Haloalkyl, C₁-C₄-Haloalkylthio, C₁-C₄-Alkylthio, Halogen, C₂-C₅-Alkoxyalkyl, C₂-C₅-Alkoxyalkoxy, Amino, C₁-C₃-Alkylamino oder Di(C₁-C₃ alkyl)-Amino;
- Y:: H, C₁-C₄ Alkyl, C₁-C₄-Alkoxy, C₁-C₄-Haloalkoxy, C₁-C₄-Alkylthio, C₁-C₄-Haloalkylthio, C₂-C₅-Alkoxyalkyl, C₂-C₅-Alkoxyalkoxy, Amino, C₁-C₃-Alkylamino, Di(C₁-C₃-Alkyl)-Amino, C₃-C₄-Alkenyloxy, C₃-C₄-Alkanyloxy, C₂-C₅-Alkylthioalkyl, C₂-C₅-Alkylsulfinylalkyl, C₂-C₅-Alkylsulfonylalkyl, C₁-C₄-Haloalkyl, C₂-C₄-Alkenyl, C₃-C₅-Cycloalkyl, Azido, Fluor oder Cyano;
- Z:: CH oder N; ist,
und deren landwirtschaftlich brauchbaren Salze.

Nachstehend seien einige geeignete SU mit ihrem INN (International Nonproprietary Name) gemäß Pesticide Manual erwähnt:
ACC 322140;
Amidosulfuron;
Azimsulfuron (N-[[(4,6-dimethoxy-2-pyrimidinyl)amino]-carbonyl]-1-methyl-4- (2-methyl-2H-tetrazol-5-yl)-1H-pyrazol-5-sulfonamid);
Bensulfuron-methyl (Methyl 2-[[[[[(4,6-dimethoxy-2-pyrimidinyl)-amino]-carbonyl]amino]sulfonyl]methyl]benzoat);
Ethyl 2-[[[[(4-chloro-6-methoxy-2-pyrimidinyl)-amino]carbonyl]amino]sulfonyl]benzoat(Chlorimuron Ethyl) ;
2-Chloro-N-[[(4-methoxy-6-methyl-1,3,5-triazin-2-yl)amino]carbonyl]benzolsulfonamid(Chlorsulfuron);
Chlorsulfoxim;
Cinosulfuron;
Cyclosulfamuron;
Ethametsulfuron-methyl (Methyl 2-[[[[[4-ethoxy-6-(methylamino)-1,3,5-triazin-2-yl]amino]carbonyl]amino]sulfonyl]-benzoat);
Ethoxysulfuron;
Flazasulfuron;
Flupyrsulfuron (Methyl 2-[[[[(4,6-dimethoxy-2-pyrimidinyl)-amino]-carbonyl]amino]sulfonyl]-6-(trifluormethyl)-3-pyridincarboxylat);
Halosulfuron-methyl ;
Imazosulfuron;
Methyl 2-[[[[(4-methoxy-6-methyl-1,3,5-triazin-2-yl)amino]carbonyl] amino]sulfonyl]benzoat(Metsulfuron methyl);
Nicosulfuron (2- [[[[(4,6-dimethoxy-2-pyrimidinyl)amino]-carbonyl]amino]sulfonyl]-N,N-dimethyl-3-pyridincarboxamid);
Oxasulfuron;
Primisulfuron (Methyl 2-[[[[[4,6-bis(difluormethoxy)-2-pyrimidinyl]amino]carbonyl] amino] sulfonyl]benzoat);
Prosulfuron;
Pyrazosulfuron-ethyl (Ethyl 5-[[[[(4,6-dimethoxy-2-pyrimidinyl)-amino]-carbonyl]amino]sulfonyl]-1-methyl-1H-pyrazol-4-carboxylat);
Rimsulfuron (N-[[(4,6-dimethoxy-2-pyrimidinylamino]carbonyl]-3-(ethylsulfonyl)-2-pyridinsulfonamid);
Sulfosulfuron;
Sulfometuron-methyl (Methyl 2-[[[[(4,6-dimethyl-2-pyrimidinyl)-amino]-carbonyl]amino]sulfonyl]benzoat();
Thifensulfuron-methyl (Methyl-3-[[[[(4-methoxy-6-methyl-1,3,5-triazin-2-yl)amino]carbonyl]amino]sulfonyl]-2-thiophencarboxylat);
2-(2-Chlorethoxy)-N-[[(4-methoxy-6-methyl-1,3,5-triazin-2-yl)-amino]carbonyl]benzolsulfonamid (Triasulfuron);
Tribenuron-methyl (Methyl 2-[[[[N-(4-methoxy-6-methyl-1,3,5-triazin-2-yl)-N-methylamino]carbonyl]amino]sulfonyl]benzoat);
und
Triflusulfuron-methyl (Methyl 2-[[[[[4-(dimethylamino)-6-(2,2,2-trifluoroethoxy)-1,3,5-triazin-2-yl]amino]-carbonyl]-amino]sulfonyl]-3-methylbenzoat);

Besonders bevorzugt sind Sulfonylharnstoffe der allgemeinen Formel III (entspricht der Formel I mit J=J₁), wie sie z.B aus der EP-A 388 873, der EP-A 559 814, der EP-A 291 851 und der
EP-A 446 743 bekannt sind : 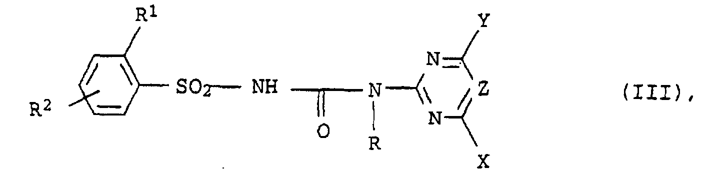 wobei die Substituenten folgende Bedeutung haben:
- R¹: C₁-C₄-Alkyl, das eine bis fünf der folgenden Gruppen tragen kann: Methoxy, Ethoxy, SO₂CH₃, Cyano, Chlor, Fluor, SCH₃, S(O)CH₃;
Halogen;
eine Gruppe ER¹⁹, in der E O, S oder NR²⁰ bedeutet;
COOR¹²;
NO₂;
S(O)ₙR¹⁷, SO₂NR¹⁵R¹⁶, CONR¹³R¹⁴;
- R²: Wasserstoff, Methyl, Halogen, Methoxy, Nitro, Cyano, Trifluormethyl, Trifluormethoxy, Difluormethoxy oder Methylthio,
- Y: F, CF₃, CF₂Cl, CF₂H, OCF₃, OCF₂Cl, C₁-C₄-Alkyl oder C₁-C₄-Alkoxy;
- X: C₁-C₂-Alkoxy, C₁-C₂-Alkyl, C₁-C₂-Alkylthio, C₁-C₂-Alkylamino, Di-C₁-C₂-Alkylamino, Halogen, C₁-C₂-Halogenalkyl, C₁-C₂-Halogenalkoxy,
- R: Wasserstoff oder Methyl;
- R¹⁹: C₁-C₄-Alkyl, C₂-C₄-Alkenyl, C₂-C₄-Alkinyl oder C₃-C₆-Cycloalkyl, welche 1 bis 5 Halogenatome tragen können. Ferner bedeutet R¹⁹ im Falle, daß E für O oder NR²⁰ steht, noch Methylsulfonyl, Ethylsulfonyl, Trifluormethylsulfonyl, Allylsulfonyl, Propargylsulfonyl oder Dimethylsulfamoyl;
- R²⁰: Wasserstoff, Methyl oder Ethyl

- R¹²: eine C₁-C₄-Alkylgruppe, welche bis zu drei der folgenden Reste tragen kann: Halogen, C₁-C₄-Alkoxy, Allyl oder Propargyl;
- R¹⁷: eine C₁-C₄-Alkylgruppe, welche einen bis drei der folgenden Reste tragen kann: Halogen, C₁-C₄-Alkoxy, Allyl oder Propargyl;
- R¹⁵: Wasserstoff, eine C₁-C₂-Alkoxygruppe oder eine C₁-C₄-Alkylgruppe;
- R¹⁶: Wasserstoff oder eine C₁-C₄-Alkylgruppe,
- n: 1 oder 2
- Z: N, CH

Insbesondere bevorzugte Sulfonylharnstoffe der Formel III sind solche der allgemeinen Formel I, in denen J für J₁ steht und die restlichen Substituenten die folgende Bedeutung haben :
- R¹: CO₂CH₃, CO₂C₂H₅, CO₂iC₃H₇, CF₃, CF₂H; OSO₂CH₃, OSO₂N(CH₃)₂, Cl, NO₂, SO₂N(CH₃)₂, SO₂CH₃ und N(CH₃)SO₂CH₃,
- R²: Wasserstoff, Cl, F oder C₁-C₂-Alkyl,
- Y: CF₂H, OCF₃, OCF₂Cl, CF₂Cl, CF₃ oder F,
- X: OCH₃, OC₂H₅, OCF₃, OCF₂Cl; CF₃, Cl, F, NH(CH₃), N(CH₃)₂ oder C₁-C₂-Alkyl,
- R⁵: Wasserstoff, und
- Z: N oder CH.

Ganz besonders bevorzugte Verbindungen der Formel III sind in der folgenden Tabelle zusammengestellt.

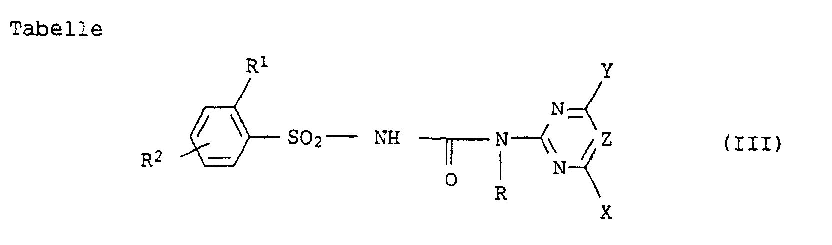

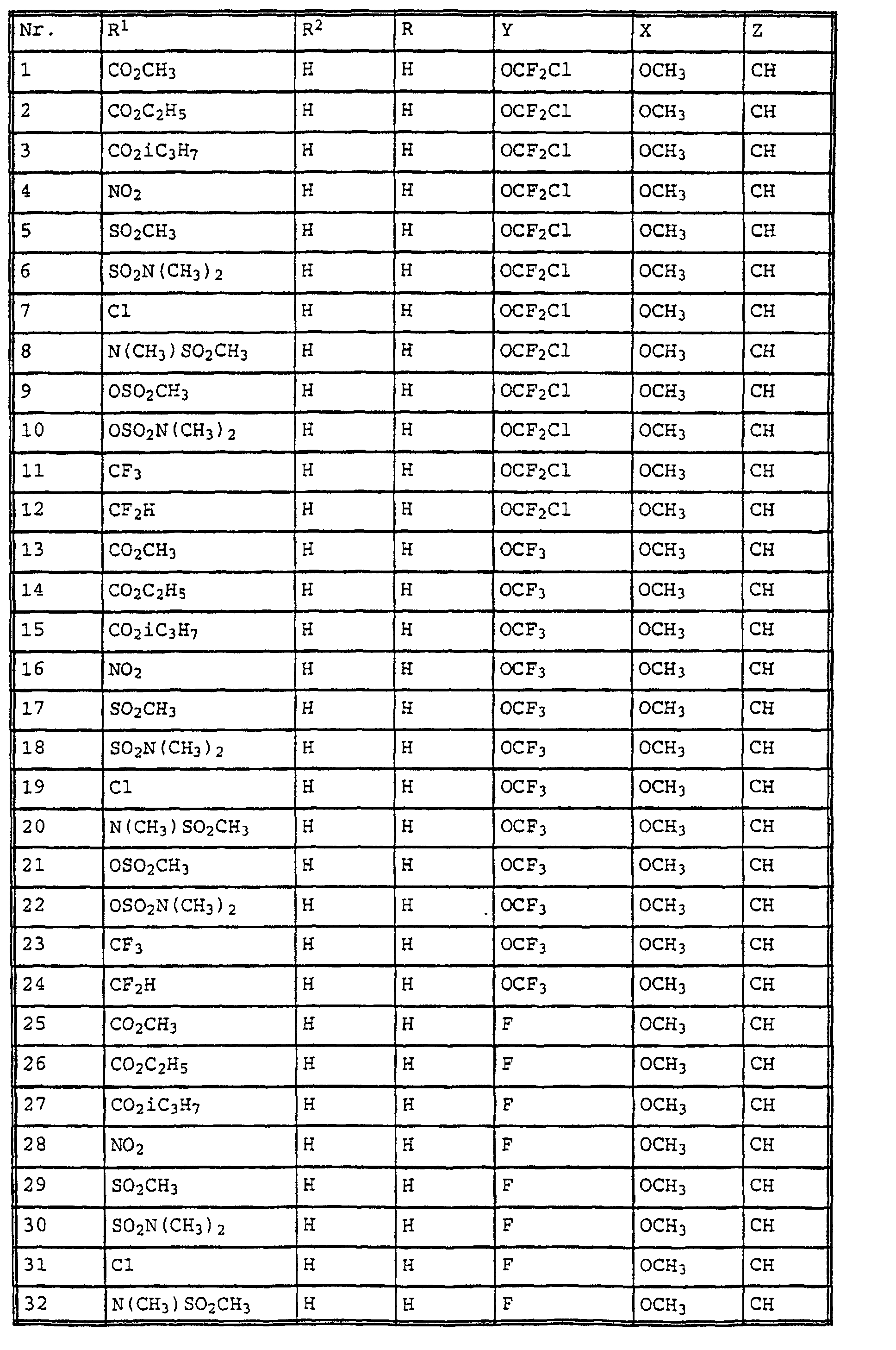

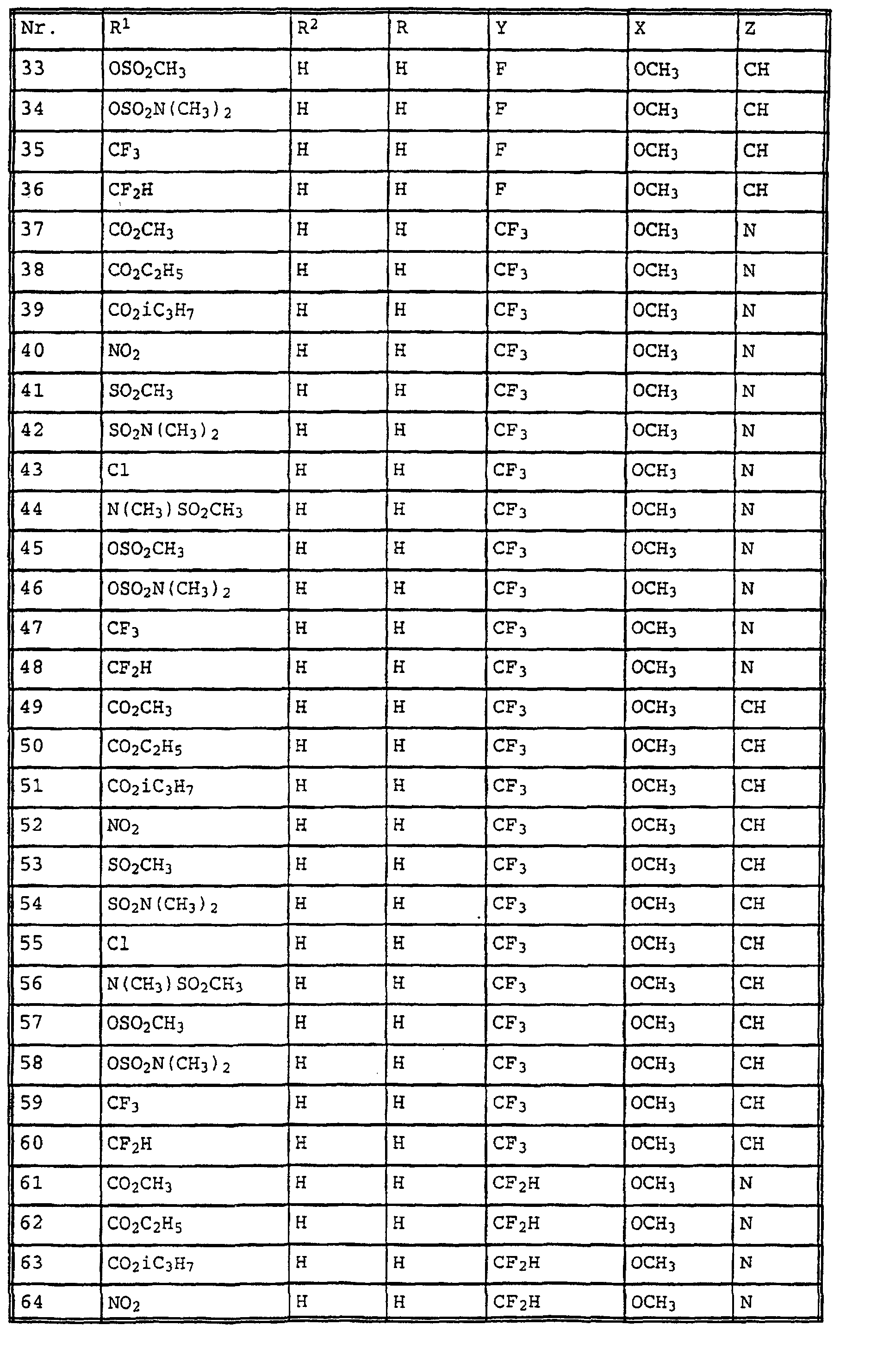

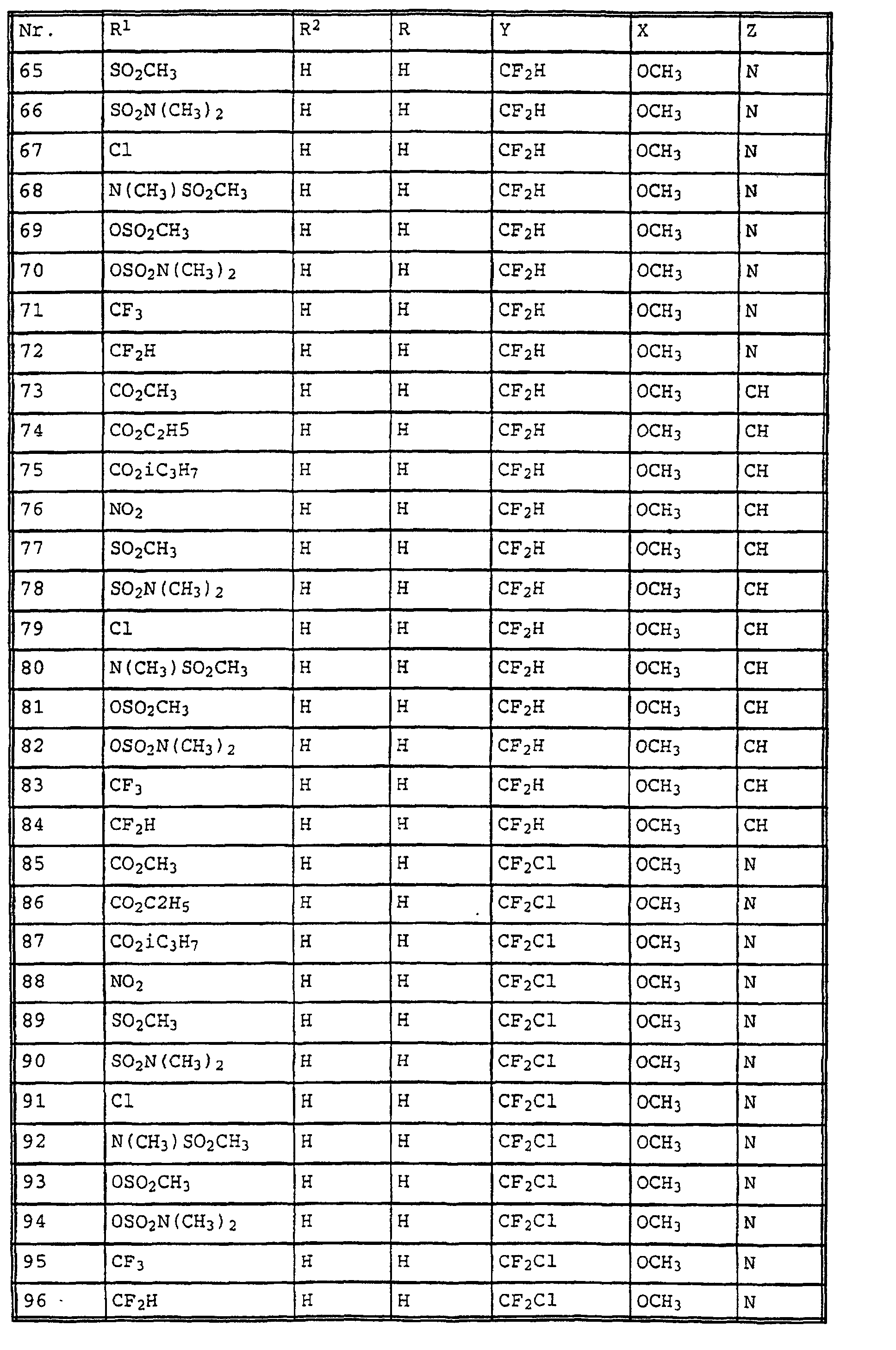

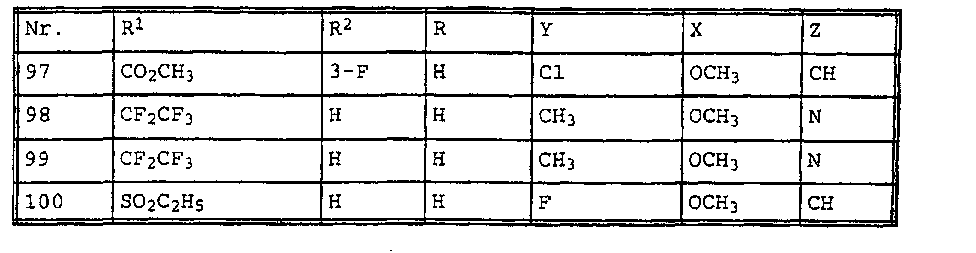

Selbstverständlich können als Komponente a) auch Mischungen mehrerer Sulfonylharnstoffe eingesetzt werden.

Als Komponente b) enthalten die erfindungsgemäßen Festformulierungen eines oder mehrere Salze Alkylsulfonsäure.

Entsprechende Produkte sind beispielsweise beschrieben in McCutheon's, Emulsifiers and Detergents, Volume 1 1994, North American Edition, McCutheson Division, Glen Rock, NJ, USA, oder in Volume 2 des entsprechenden Werks (International Edition). Weiterhin sei genannt "Surfactants in Europe", A Directory of surface active agents available in Europe, 2. Auflage, 1989, Terg Data, Darlington, England.

Beispielhaft seien hier, Alkylsulfonate (Lutensit® A-PS, Hostapur® SAS, Witconate® NAS, Texapon® SCO) sowie deren Na-, K-, Ca und Ammoniumsalze oder deren Mischungen genannt.

Besonders bevorzugt werden Alkylsulfonate, die einen C₈-C₂₅, vorzugsweise einen C₁₀-C₂₀ - Alkylrest tragen. Entsprechende Produkte sind unter den Bezeichnungen Lutensit® A-PS (BASF AG), Hostapur® SAS 60, (Hoechst AG), Witconate® NAS 8, (Witco Corporation) oder Texapon® SCO (Henkel KGaA) kommerziell erhältlich.

Der Anteil der Komponente a) an den erfindungsgemäßen festen Mischungen liegt im allgemeinen im Bereich von 0,5 bis 75 Gew.%, vorzugsweise von 1 bis 25 Gew.%, bezogen auf das Gesamtgewicht der Formulierung.

Der Anteil der Tenside (Komponente b) liegt im allgemeinen im Bereich von 1 bis 75, insbesondere 1 bis 50 und besonders bevorzugt 5 bis 25 Gew.%, bezogen auf das Gesamtgewicht der Formulierung.

Neben den Komponenten a) und b) können die erfindungsgemäßen festen Mischungen noch weitere, mit Sulfonylharnstoffen mischbare bzw. synergistisch wirksame andere Wirkstoffe enthalten. Entsprechende Produkte sind dem Fachmann bekannt und in der Literatur beschrieben. Die folgenden Gruppen von weiteren Wirkstoffen seien beispielhaft unter Verwendung ihrer INN (in englischer Sprache) genannt :
c1: 1,3,4-Thiadiazole :
   buthidazole, cyprazole;
c2: Amide:
   allidochlor (CDAA), Benzoylprop-ethyl, Bromobutide, chlorthiamid, dimepiperate, dimethenamid, diphenamid, etobenzanid (benzchlomet), flamprop-methyl, fosamin, isoxaben, monalide, naptalame, pronamid (propyzamid), propanil;
c3: Aminophosphorsäuren:
   bilanafos (bialaphos), buminafos, glufosinate-ammonium, glyphosate, sulfosate
c4: Aminotriazole:
   Amitrol;
c5: Anilide:
   anilofos, mefenacet, thiafluamide;
c6: Aryloxyalkansäuren
   2,4-D, 2,4-DB, clomeprop, dichlorprop, dichlorprop-P, (2.,4-DP-P), fenoprop (2,4,5-TP), fluoroxypyr, MCPA, MCPB, mecoprop, mecoprop-P, napropamide, napropanilide, triclopyr;
c7: Benzoesäuren:
   chloramben, dicamba;
c8: Benziothiadiazinone:
   Bentazon;
c9: Bleacher:
   clomazone (dimethazone), diflufenican, fluorochloridone, flupoxam, fluridone, pyrazolate, sulcotrione (chlor-mesulone) isoxaflutol, 2-(2'-Chlor-3'-Ethoxy-4'-ethylsulfonyl-benzoyl)-4-methylcyclohexan-1,3-dion;
c10: Carbamate:asulam, barban, butylate, carbetamide, chlorbufam, chlorpropham, cycloate, desmedipham, diallate, EPTC, esprocarb, molinate, orbencarb, pebulate, phenisopham, phenmedipham, propham, prosulfocarb, pyributicarb, sulfallate (CDEC), terbucarb, thiobencarb (benthiocarb), tiocarbazil, triallate, vernolate;
c11: Chinolinsäuren:
   quinclorac, quinmerac;
c12: Chloracetanilide:
   acetochlor, alachlor, butachlor, butenachlor, diethatyl ethyl, dimethachlor, dimethenamide (vgl. auch unter Kategorie c2) metazachlor, metolachlor, pretilachlor, propachlor, prynachlor, terbuchlor, thenylchlor, xylachlor;
c13:Cyclohexenone:
   alloxydim, caloxydim, clethodim, cloproxydim, cycloxydim, sethoxydim, tralkoxydim, 2-{1-[2-(4-Chlor-phenoxy) propyloxyimino] butyl}-3-hydroxy-5-(2H-tetrahydrothiopyran-3-yl)-2-cyclohexen-1-on;
c14: Dichlorpropionsäuren:
   dalapon;
c15: Dihydrobenzofurane:
   ethofumesate;
c16: Dihydrofuran-1-one:
   flurtamone;
c17: Dinitroaniline:
   benefin, butralin, dinitramin, ethalfluralin, fluchloralin, isopropalin, nitralin, oryzalin, pendimethalin, prodiamine, profluralin, trifluralin;
c18: Dinitrophenole:
   bromofenoxim, dinoseb, dinoseb-acetat, dinoterb, DNOC;
c19: Diphenylether:
   acifluorfen-sodium, aclonifen, bifenox, chlornitrofen (CNP), difenoxuron, ethoxyfen, fluorodifen, fluoroglycofen-ethyl, fomesafen, furyloxyfen, lactofen, nitrofen, nitrofluorfen, oxyfluorfen;
c20: Dipyridylene:
   cyperquat, difenzoquat-methylsulfat, diquat, paraquat-dichlorid;
c21: Harnstoffe:
   benzthiazuron, buturon, chlorbromuron, chloroxuron, chlortoluron, cumyluron, dibenzyluron, cycluron, dimefuron, diuron, dymron, ethidimuron, fenuron, fluormeturon, isoproturon, isouron, karbutilat, linuron, methabenzthiazuron, metobenzuron, metoxuron, monolinuron, monuron, neburon, siduron, tebuthiuron, trimeturon;
c22: Imidazole:
   iscarbamide;
c23: Imidazolinone:
   imazamethapyr, imazapyr, imazaquin, imazethabenz-methyl (imazame), imazethapyr, imazamox;
c24: Oxadiazole:
   methazole, oxadiargyl, oxadiazone;
c25: Oxirane:
   tridiphane
c26: Phenole:
   bromoxynil, ioxynil;
c27: Phenoxypropionsäureester
   clodinafop, cyhalofop-butyl, diclofop-methyl, fenoxaprop-ethyl, fenoxaprop-p-ethyl, fenthiapropethyl, fluazifop-butyl, fluazifop-p-butyl, haloxyfop-ethoxyethyl, haloxyfop-methyl, haloxyfop-p-methyl, isoxapyrifop, propaquizafop, quizalofop-ethyl, guizalofop-p-ethyl, quizalofoptefuryl;
c28: Phenylessigsäuren:
   chlorfenac (fenac);
c29: Phenylpropionsäuren:
   chlorophenprop-methyl;
c30: Protoporphyrinogen-IX-Oxydase-Hemmer:
   benzofenap, cinidon-ethyl, flumiclorac-pentyl, flumioxazin, flumipropyn, flupropacil, fluthiacet-methyl, pyrazoxyfen, sulfentrazone, thidiazimine, carfentrazone, azafenidin;
c31: Pyrazole:
   nipyraclofen;
c32: Pyridazine:
   chloridazon, maleic hydrazide, norflurazon, pyridate;
c33: Pyridincarbonsäuren:
   clopyralid, dithippyr, picloram, thaizopyr;
c34: Pyrimidylether:
   pyrithiobac-acid, pyrithiobac-sodium, pyriminobac-methyl, bispyribenzoxim, bispyribac-sodium;
c35: Sulfonamide:
   flumetsulam, metosulam, cloransulam-methyl, diclosulam;
c36: Triazine:
   ametryn, atrazin, aziprotryn, cyanazine, cyprazine, desmetryn, dimethamethryn, dipropetryn, eglinazin-ethyl, hexazinon, procyazine, prometon, prometryn, propazin, secbumeton, simazin, simetryn, terbumeton, terbutryn, terbutylazin, trietazin, dimesyflam;
c37: Triazinone:
   ethiozin, metamitron, metribuzin;
c38: Triazolcarboxamide:
   triazofenamid;
c39: Uracile:
   bromacil, lenacil, terbacil;
c40: Verschiedene :
   benazolin, benfuresate, bensulide, benzofluor, butamifos, cafenstrole, chlorthal-dimethyl (DCPA), cinmethylin, dichlobenil, endothall, fluorbentranil, mefluidide, perfluidone, piperophos, diflufenzopyr, diflufenzopyr-natrium
oder die umweltverträglichen Salze der vorstehend genannten Wirkstoffgruppen.

Bevorzugte weitere Wirkstoffe c) sind z.B.
bromobutide, dimethenamide, isoxaben, propanil,
glufosinate-ammonium, glyphosate, sulfosate,
mefenacet, thiafluamide,
2,4-D, 2,4-DB, dichlorprop, dichlorprop-P,
dichlorprop-P(2,4-DP-P), fluoroxopyr, MCPA, mecoprop, mecoprop-P, dicamba,
Bentazon,
clomazone, diflufenican, sulcotrione, isoxaflutole, phenmedipham, thiobencarb,
quinclorac, quinmerac,
acetochlor, alachlor, butachlor, metazachlor, metolachlor, pretilachlor,
butroxydim, caloxydim, clethodim, cycloxydim, sethoxydim, tralkoxydim, 2-{1-[2-(4-Chlor-phenoxy) propyloxyimino] butyl}-3-hydroxy-5-(2H-tetrahydrothiopyran-3-yl)-2-cyclohexen-1-on, pendimethalin,
acifluorfen-sodium, bifenox, fluoroglycofen-ethyl, fomesafen, lactofen,
chlortoluron, cycluron, dymron, isoproturon, metabenzthiazuron, imazaquin, imazamox, imazethabenz-methyl, imazethapyr,
bromoxynil, ioxynil,
clodinafop, cyhlaofop-butyl, fenoxyprop-ethyl, fenoxaprop-p-ethyl, haloxyfop-p-methyl,
cinidon-ethyl, flumiclorac-pentyl, carfentrazone, flumipropyn, fluthiacet-methyl,
pyridate,
clopyralid,
bispyribac-sodium, pyriminobac-methyl,
flumetsulam, metosulam,
atrazin, cyanazine, terbutylazine,
benazolin, benfuresate, cafenstrole, cinemthylin, ammonium-bentazon, cloquintocet, diflufenzopyr, diflufenzopyr-Natrium, pyraflufen-ethyl.

Insbesondere bevorzugt sind folgende Verbindungen c):
2,4-D, Dichlorprop-P, MCPA, mecoprop-P,
dicamba,
bentazon,
diflufenican, sulcotrione,
quinclorac,
caloxydim, cycloxydim, sethoxydim, 2-{1-[2-(-(4-Chlor-phenoxy) propyloxyimino] butyl}-3-hydroxy-5-(2H-tetrahydrothiopyran-3-yl)-2-cyclohexen-1-on,
acifluorfen-sodium, fluoroglycofen-ethyl,
bromoxynil,
fenoxyprop-ethyl,
cinidon-ethyl,
Atrazin, terbutylazin,
ammonium-bentazon, cloquintocet,
thiafluamid, isoxaflutole, diflufenzopyr, diflufenzopyr-Na, carfentrazone, imazamox.

Ganz besonders bevorzugt sind folgende Verbindungen c):
2,4-D, dichlorprop-P, Mecoprop-P, MCPA, ammonium-bentazon, Bentazon, diflufenican, quinclorac, 2-{1-[2-(-(4-Chlor-phenoxy) propyloxyimino] butyl}-3-hydroxy-5-(2H-tetrahydrothiopyran-3-yl)-2-cyclohexen-1-on, caloxydim, cycloxydim, sethoxydim, fluoroglycofen-ethyl, cinidon-ethyl, atrazin, terbutylazine, dicamba, diflufenzopyr und diflufenzopyr-Na.

Der Anteil der weiteren Wirkstoffe c), wenn solche vorhanden sind, liegt im allgemeinen im Bereich von 0,5 bis 75, vorzugsweise von 1 bis 60 Gew.% der Formulierung.

Neben den vorstehend beschriebenen Komponenten a), b) und c) können die erfindungsgemäßen festen Mischungen noch an sich bekannte Formulierungshilfsmittel enthalten.

Als oberflächenaktive Stoffe kommen dabei die Alkali-, Erdalkalioder Ammoniumsalze von aromatischen Sulfonsäuren, z.B. Lignin-, Phenol-, Naphthalin- und Dibutylnaphthalinsulfonsäure, sowie von Fettsäuren, Alkylpolyglykoside, Kondensationsprodukte von sulfoniertem Naphthalin und seiner Derivate mit Formaldehyd, Kondensationsprodukte des Naphtalins bzw. der Naphthalinsulfonsäuren mit Phenol und Formaldehyd, Kondensationsprodukte des Phenols oder der Phenolsulfonsäure mit Formaldehyd, Kondensationsprodukte des Phenols mit Formaldehyd und Natriumsulfit, Polyoxyethylenoctylphenolether, ethoxyliertes Isooctyl-, Octyl- oder Nonylphenol, Tributylphenylpolyglykolether, Alkylarylpolyetheralkohole, Isotridecylalkohol, Fettalkohol/Ethylenoxid-Kondensate, ethoxyliertes Rizinusöl, Polyoxyethylenalkylether, ethoxylierte Triarylphenole, Salze phosphatierter Triarylphenolethoxylate Polyoxypropylenalkylether, Laurylalkoholpolyglykoletheracetat, Sorbitester, Ligninsulfit-Ablaugen oder Methylcellulose oder deren Mischungen in Betracht.

Bei Mitverwendung oberflächenaktiver Stoffe liegt deren Anteil im allgemeinen im Bereich von 0,5 bis 25 Gew.%, bezogen auf das Gesamtgewicht der festen Mischung.

Die erfindungsgemäßen festen Mischungen können auch zusammen mit Trägermaterialien verwendet werden. Beispielhaft seien als Trägerstoffe erwähnt:
Mineralerden wie Kieselsäuren, Kieselgele, Silikate, Talkum, Kaolin, Attaclay, Kalkstein, Kreide, Löß, Ton, Dolomit, Diatomeenerde, Calciumsulfat, Magnesiumsulfat, Magnesiumoxid, gemahlene Kunststoffe, Düngemittel wie Ammoniumsulfat, Ammoniumphosphat, Ammoniumnitrat, Thioharnstoff und Harnstoff, pflanzliche Produkte wie Getreidemehle, Baumrinden-, Holz- und Nußschalenmehl, Cellulosepulver, Attapulgite, Montmorillonite, Glimmer, Vermiculite, synthetische Kieselsäuren und synthetische Calciumsilicate oder deren Mischungen.

Als weitere Zusatzstoffe in an sich üblichen Mengen können ferner eingesetzt werden:

Wasserlösliche Verbindungen oder Salze wie:
Natriumsulfat, Kaliumsulfat, Natriumchlorid, Kaliumchlorid, Natriumacetat, Ammoniumhydrogensulfat, Ammoniumchlorid, Ammoniumacetat, Ammoniumformiat, Ammoniumoxalat, Ammoniumcarbonat, Ammoniumhydrogencarbonat, Ammoniumthiosulfat, Ammoniumhydrogendiphosphat, Ammoniumdihydrogenmonophosphat, Ammoniumnatriumhydrogenphosphat, Ammoniumthiocyanat, Ammoniumsulfamat oder Ammoniumcarbamat;

Bindemittel, wie:
Polyvinylpyrrolidon, Polyvinylalkohol, partiell hydrolysiertes Polyvinylacetat, Carboxymethylcellulose, Stärke, Vinylpyrrolidon/-Vinylacetat-Copolymere und Polyvinylacetat oder deren Mischungen;

Schmiermittel, wie:
Mg-Stearat, Na-Stearat, Talkum oder Polyethylenglykol oder deren Mischungen;

Entschäumer, wie:
Silikonemulsionen, langkettige Alkohole, Phosphorsäureester, Acetylendiole, Fettsäuren oder fluororganische Verbindungen,
und

Komplexbildner, wie:
Salze der Ethylendiamintetraessigsäure (EDTA), Salze der Trinitrilotriessigsäure oder Salze von Polyphosphorsäuren oder deren Mischungen.

Die erfindungsgemäßen festen Mischungen können in Form von Pulver, Granulat, Briketts, Tabletten und ähnliche Formulierungsvarianten hergestellt werden. Neben Pulvern sind dabei Granulate besonders bevorzugt. Bei den Pulvern kann es sich um wasserlösliche oder wasserdispergierbare Pulver handeln. Bei den Granulaten kann es sich um wasserlösliche oder wasserdispergierbare Granulate zum Einsatz in der Spritzapplikation oder um sog. Streugranulate zur Direktapplikation handeln. Die mittlere Teilchengröße der Granulate liegt im allgemeinen zwischen 200 µm und 2 mm.

Die erhaltenen Granulatformulierungen sind staubfreie, freifließende, nicht verbackende Produkte, die in kaltem Wasser gut löslich bzw. dispergierbar sind.

Aufgrund ihrer Eigenschaften können die Produkte leicht in größeren Mengen abgefüllt werden. Neben Gebinden wie Kunststoff-, Papier-, Laminatsäcken oder Beuteln können sie in Kartons oder anderen Bulk-Containern gehandhabt werden. Um eine Exposition des Anwenders weiter zu vermeiden, ist es möglich, die Produkte in wasserlöslichen Folienbeuteln, wie z.B. Polyvinylalkohol-Folienbeuteln, zu verpacken, die direkt in den Spritztank gegeben werden und sich dort auflösen. Für solche wasserlöslichen Folien können eingesetzt werden u.a. Polyvinylalkohol oder CelluloseDerivaten wie Methylcellulose, Methyl-hydroxypropyl-cellulose oder Carboxymethylcellulose. Durch Portionierung in anwendungsgerechter Größe kommt der Anwender nicht mehr mit dem Produkt in Berührung. vorzugsweise werden die wasserlöslichen Beutel in einer wasserdampfundurchlässigen äußeren Hülle wie PolyethylenFolie, polyethylen-laminiertes Papier oder Alufolie verpackt.

Die erfindungsgemäßen Festformulierungen lassen sich nach verschiedenen, dem Fachmann bekannten Verfahren herstellen.

Als bevorzugte Herstellverfahren für die genannten Formulierungen sind die Extrudergranulation, Sprühtrocknung, Wirbelschichtagglomeration, Mischergranulation und die Tellergranulation zu nennen.

Besonders geeignet ist die Wirbelschichtgranulation (WSG). Je nach gewünschter Zusammensetzung der Formulierung wird eine wässrige Lösung, Emulsion oder Suspension, die alle Rezepturbestandteile enthält, in einer WSG-Apparatur versprüht und agglomeriert.

Wahlweise können aber auch Wirkstoffsalze und/oder anorganische Ammoniumsalze in der Apparatur vorgelegt werden und mit einer Lösung oder Emulsion/Suspension der restlichen Rezepturbestandteile besprüht und dabei agglomeriert werden. Ferner ist es möglich, wässrige Lösungen, Emulsionen oder Suspensionen, die bestimmte Rezepturbestandteile enthalten, nacheinander auf ein Wirkstoffgranulat, ein Wirkstoffsalz und/oder ein anorganisches Ammoniumsalz aufzutragen und so verschiedene umhüllende Schichten zu erhalten.

Im allgemeinen erfolgt im Zuge der Wirbelschichtgranulierung eine ausreichende Trocknung des Granulats. Es kann jedoch vorteilhaft sein, der Granulation einen separaten Trocknungsschritt im gleichen oder in einem separaten Trockner nachzuschalten. Im Anschluß an die Granulation/Trocknung wird das Produkt abgekühlt und gesiebt.

Ein weiteres besonders geeignetes Verfahren ist die Extrudergranulation. Zur Extrudergranulierung eignen sich vorzugsweise Korb-, Radial- oder Dome-Extruder mit geringer Verdichtung des Granulatkorns.

Zur Granulation wird eine Feststoffmischung in einem geeigneten Mischer mit einer Granulierflüssigkeit angeteigt, bis eine extrudierbare Masse entsteht. Diese wird in einem der genannten Extruder extrudiert. Zur Extrusion werden Lochgrößen zwischen 0,3 und 3 mm verwendet (vorzugsweise 0,5-1,5mm) . Als Feststoffmischungen dienen Gemische aus Wirkstoffen, Formulierungshilfsmitteln und ggf. wasserlöslichen Salzen. Diese werden im allgemeinen vorgemahlen. Teilweise ist es ausreichend, wenn nur die wasserunlöslichen Stoffe in geeigneten Mühlen vorgemahlen werden.

Als Granulierflüssigkeit eignet sich Wasser, die erfindungsgemäßen sulfat- oder sulfonathaltigen Tenside oder wässrige Lösungen davon. Weiterhin geeignet sind wässrige Lösungen von anorg. Salzen, nichtionischen Tensiden, anionischen Tensiden, Lösungen von Bindemitteln wie Polyvinylpyrrolidon, Polyvinylalkohol, Carboxymethylcellulose, Stärke, Vinylpyrrolidin/Vinylacetat-Copolymere, Zucker, Dextrin oder Polyethylenglykol. Nach Extrudergranulation wird das erhaltene Granulat getrocknet und ggf. gesiebt um von Grob- und Feinanteil abzutrennen.

### Vergleichsbeispiel 1:

Eine Vormischung bestehend aus:

| | |
|---|---|
| 73,1 g | SU 1 (Verbindung Nr. 47 aus Tabelle 1) (techn. 95,7%) |
| 8 g | Tamol^{R} NH |
| 17,9 g | Ufoxane^{R} 3A |

wurde gemischt und in einer Rotorschnellmühle vermahlen.

Im weiteren wurden:

| | |
|---|---|
| 7,1 g | Vormischung1 |
| 5 g | Extrusil^{R} (Degussa) |
| 77,9 g | Ammoniumsulfat |

in einem Moulinette Haushaltsmischer mit 24g Klearfac^{R} AA-270 als 50%ige wässrige Lösung vermischt. Die erhaltene Masse wurde mittels eines Extruders (KAR-75, Fitzpacrick Europe) extrudiert. Die erhaltenen feuchten Granulate wurden im Trockenschrank getrocknet.

### Vergleichsbeispiel 2

Eine Vormischung bestehend aus:

| | |
|---|---|
| 73,1 g | SU 1 (techn. 95,7%) |
| 8 g | Tamol^{R} NH |
| 17,9 g | Ufoxane^{R} 3A |

wurde gemischt und in einer Rotorschnellmühle vermahlen.

Im weiteren wurden:

| | |
|---|---|
| 7,1 g | Vormischung |
| 15 g | Extrusil^{R} (Degussa) |
| 77,9 g | Ammoniumsulfat |

in einem Moulinette Haushaltsmischer mit 23g Armoblem^{R} 557 als 50%ige wässrige Lösung vermischt. Die erhaltene Masse wurde mittels eines Extruders (KAR-75, Fitzpatrick Europe) extrudiert. Die erhaltenen feuchten Granulate wurden im Trockenschrank getrocknet.

### Vergleichsbeispiel 3

Eine Vormischung bestehend aus:

| | |
|---|---|
| 73,1 g | SU 1 (techn. 95,7%) |
| 8 g | Tamol^{R} NH |
| 17,9 g | Ufoxane^{R} 3A |

wurde gemischt und in einer Rotorschnellmühle vermahlen.

Im weiteren wurden:

| | |
|---|---|
| 7,1 g | Vormischung |
| 15 g | Extrusil^{R} (Degussa) |
| 77,9 g | Ammoniumsulfat |

in einem Moulinette Haushaltsmischer mit 29g Lutensol^{R} ON 80 als 50%ige wässrige Lösung vermischt. Die erhaltene Masse wurde mittels eines Extruders (KAR-75, Fitzpatrick Europe) extrudiert. Die erhaltenen feuchten Granulate wurden im Trockenschrank getrocknet.

### Vergleichsbeispiel 4

Eine Mischung bestehend aus:

| | |
|---|---|
| 6,9 g | Metsulfuron-Methyl (techn. 99%) |
| 3 g | Tamol^{R} NH |
| 6 g | Ufoxane^{R} 3A |
| 15 g | Extrusil^{R} |
| 43,1 g | Ammonsulfat |

wurde intensiv vermischt und mittels einer Laborrotorschnellmühle vermahlen. Die erhaltene Pulvermischung wurde in einem Planetenmischer (Kenwood Chef) mit 17 Teilen Lutensol^{R} ON 30 vermischt. Die erhaltene Masse wurde mittels eines Extruders (DGL-1, Fitzpatrick Europe) extrudiert. Die erhaltenen feuchten Granulate wurden in einem wirbelbetttrockner getrocknet.

### Vergleichsbeispiel 5

Eine Vormischung bestehend aus:

| | |
|---|---|
| 73,1 g | SU 1 (techn. 95,7%) |
| 8 g | Tamol^{R} NH |
| 17,9 g | Ufoxane^{R} 3A |

wurde gemischt und in einer Rotorschnellmühle vermahlen.

Im weiteren wurden:

| | |
|---|---|
| 7,1 g | Vormischung |
| 5 g | Tamol^{R} NH |
| 58,9 g | Ammoniumsulfat |
| 3 g | Sipernat^{R} 22 |
| 25 g | Lutensit^{R} A-LBN |
| 1 g | Antischaumemulsion SRE |

in einem Moulinette Haushaltsmischer mit 14 ml Wasser angeteigt. Die erhaltene Masse wurde mittels eines Extruders (KAR-75, Fitzpatrick Europe) extrudiert. Die erhaltenen feuchten Granulate wurden im Trockenschrank getrocknet.

### Beispiel 1

Eine Vormischung bestehend aus:

| | |
|---|---|
| 73,1 g | SU 1 technisch |
| 17,9 g | Ufoxane^{R} 3A |
| 8 g | Tamol^{R} NH |

wurde gemischt und in einer Rotorschnellmühle vermahlen.

Im weiteren wurden:

| | |
|---|---|
| 7,1 g | Vormischung |
| 15 g | Extrusil^{R} |
| 52,9 g | Ammoniumsulfat |
| 25 g | Lutensit^{R} A-PS |

in einem Moulinette Haushaltsmischer mit 14 ml Wasser angeteigt. Die erhaltene Masse wurde mittels eines Extruders (KAR-75, Fitzpatrick Europe) extrudiert. Die erhaltenen feuchten Granulate wurden im Trockenschrank getrocknet.

### Beispiel 2

Eine Vormischung bestehend aus:

| | |
|---|---|
| 73,1 g | SU 1 (techn. 95,7%) |
| 8 g | Tamol^{R} NH |
| 17,9 g | Ufoxane^{R} 3A |

wurde gemischt und in einer Rotorschnellmühle vermahlen.

Im weiteren wurden:

| | |
|---|---|
| 7,1 g | Vormischung |
| 15 g | Extrusil^{R} (Degussa) |
| 52,9 g | Kaliumsulfat |
| 24 g | Lutensit^{R} AP-S |

in einem Moulinette Haushaltsmischer vermischt. Die erhaltene Masse wurde mittels eines Extruders (KAR-75, Fitzpatrick Europe) extrudiert. Die erhaltenen feuchten Granulate wurden im Trockenschrank getrocknet.

### Vergleichsbeispiel 6

Eine Mischung bestehend aus:

| | |
|---|---|
| 5,1 g | SU 1 (techn. 98,54%) |
| 3 g | Tamol^{R} NH |
| 6 g | Ufoxane^{R} 3A |
| 15 g | Extrusil^{R} (Degussa) |
| 44,9g | Ammoniumsulfat |

wurde gemischt und in einer Rotorschnellmühle vermahlen.

Das erhaltene Pulver wurde in einem Moulinette Haushaltsmischer mit 25g Witconate^{R} 3203 und 1 g Antischaummittel SRE vermischt. Die erhaltene Masse wurde mittels eines Extruders (KAR-75, Fitzpatrick Europe) extrudiert. Die erhaltenen feuchten Granulate wurden im Trockenschrank getrocknet.

### Beispiel 3

Eine Mischung bestehend aus:

| | |
|---|---|
| 5,1 g | SU 1 (techn. 98,54%) |
| 3 g | Tamol^{R} NH |
| 6 g | Ufoxane^{R} 3A |
| 15 g | Extrusil^{R} (Degussa) |
| 44,9 g | Ammoniumsulfat |

wurde gemischt und in einer Rotorschnellmühle vermahlen. Das erhaltene Pulver wurde in einem Moulinette Haushaltsmischer mit 25g Witconate^{R} NAS 8 und 1 g Antischaummittel SRE vermischt. Die erhaltene Masse wurde mittels eines Extruders (KAR-75,Fitz-patrick Europe) extrudiert. Die erhaltenen feuchten Granulate wurden im Trockenschrank getrocknet.

### Beispiel 4

Eine Vormischung bestehend aus:

| | |
|---|---|
| 5,1g | SU 1 (techn. 98,5%) |
| 3,1g | Cinidon-Ethyl (techn. 98%) |
| 1g | Tamol^{R} NH |
| 2g | Ufoxane^{R} 3A |
| 15g | Extrusil^{R} (Degussa) |
| 47,8g | Ammoniumsulfat |

wurde gemischt und in einer Strahlmühle vermahlen.

Im weiteren wurden:

| | |
|---|---|
| 74g | Vormischung |
| 25g | Lutensit^{R} APS (Alkylsulfonat, BASF AG, techn. 65%) |
| 1g | Antischaummittel SRE |

in einem Planetenmischer (Kenwood-Chef) vermischt und mit insgesamt 6,5g wasser (bezogen auf 100g Produkt) versetzt. Die erhaltene Masse wurde mittels eines Extruders (DGL-1, Fitzpatrick Europe) extrudiert. Die erhaltenen feuchten Granulate wurden in einem Wirbelbetttrockner getrocknet. Man erhielt ein gut dispergierendes Granulat.

### Beispiel 5

Eine Vormischung bestehend aus:

| | |
|---|---|
| 5,1 g | SU 1 (techn. 98,5%) |
| 3,1 g | Cinidon-Ethyl (techn. 98%) |
| 1 g | Tamol^{R} NH |
| 2 g | Ufoxane^{R} 3A |
| 15 g | Extrusil^{R} (Degussa) |
| 47,8 g | Ammoniumsulfat |

wurde gemischt und in einer Strahlmühle vermahlen.

Im weiteren wurden:

| | |
|---|---|
| 74 g | Vormischung |
| 22,5 g | Lutensit^{R} APS (Alkylsulfonat, BASF AG, techn. 65%) |
| 1 g | Antischaummittel SRE |

in einem Planetenmischer (Kenwood-Chef) vermischt und mit insgesamt 5 g Wasser (bezogen auf 100 g Produkt) versetzt. Die erhaltene Masse wurde mittels eines Extruders (DGL-1, Fitzpatrick Europe) extrudiert. Die erhaltenen feuchten Granulate wurden in einem Wirbelbetttrockner getrocknet. Man erhielt ein gut dispergierendes Granulat.

### Beispiel 6

Eine Vormischung bestehend aus:

| | |
|---|---|
| 6 g | SU1 |
| 10 g | Clefoxydim-Lithium |
| 10 g | Extrusil^{R} |
| 10 g | Harnstoff |
| 3 g | Morwet^{R} EFW |
| 1 g | Aerosol^{R} OT B |
| 40 g | Tamol^{R} NH |

wurde intensiv vermischt und mittels einer Luftstrahlmühle vermahlen. Die so erhaltene Pulvermischung wurde in einem Planetenmischer (Kenwood Chef) mit 20 Teilen Lutensit^{R} APS vermischt. Zur Erzeugung einer extrudierfähigen Masse wurden weiterhin 1,8% Wasser zugegeben. Die erhaltene Masse wurde mittels eines Extruders (DGL-1, Fitzpatrick Europe) extrudiert. Die erhaltenen feuchten Granulate wurden in einem Wirbelbetttrockner getrocknet.

### Beispiel 7

Eine Mischung bestehend aus:

| | |
|---|---|
| 6,9 g | Metsulfuron-Methyl (techn. 99%) |
| 3 g | Tamol^{R} NH |
| 6 g | Ufoxane^{R} 3A |
| 15 g | Extrusil^{R} |
| 43,1 g | Ammonsulfat |

wurde intensiv vermischt und mittels einer Laborrotorschnellmühle vermahlen. Die erhaltene Pulvermischung wurde in einem Planetenmischer (Kenwood Chef) mit 25 Teilen Lutensit^{R} APS vermischt. Die erhaltene Masse wurde mittels eines Extruders (DGL-1, Fitzpatrick Europe) extrudiert. Die erhaltenen feuchten Granulate wurden in einem Wirbelbetttrockner getrocknet.

Die nachstehende Tabelle erläutert die in den Beispielen eingesetzten Komponenten:

**Tabelle 2:**

| **Name** | **chem. Bezeichnung** | **Bezugsquelle** |
|---|---|---|
| Tamol^{R} NH | Naphthalinsulfonsäure-Formaldehyd-Kondensat | BASF AG |
| Ufoxane^{R} 3A | Na-Ligninsulfonat | Borregaard |
| Morwet^{R} D425 | Naphthalinsulfonsäure-Formaldehyd-Kondensat | BASF AG |
| Wettol^{R} NT 1 | Alkyl-Naphthalinsulfonat | BASF AG |
| Extrusil^{R} | hochdisperses Calciumsilicat | Dequssa |
| Sipernat^{R} 22 | hochdisperse Kieselsäure | Degussa |
| Antischaummittel SRE | Silikonölemulsion | Wacker-Chemie |
| Lutensol^{R} ON 30 | Fettalkoholethoxylat (3EO) | BASF AG |
| Lutensol^{R} ON 60 | Fettalkoholethoxylat (6EO) | BASF AG |
| Lutensol^{R} ON 80 | Fettalkoholethoxylat (8EO) | BASF AG |
| Lutensit^{R} A-PS | Na-Alkansulfonat | BASF AG |
| Lutensit^{R} A-LBN | Na-Alkylbenzolsulfonat | BASF AG |
| Armoblem^{R} 557 | ethoxyliertes Fettamin | Akzo |
| Klearfac^{R} AA-270 | phosphatiertes Fettalkoholethoxylat | BASF Corporation |
| Morwet^{R} EFW | Anionischer Netzmittel-Blend | Witco |
| Witconate 3203 | Na-alpha-Olefinsulfonat | Witco |
| Witconate NAS 8 | Na-Alkansulfonat | Witco |
| Aerosol OT-B | Na-Dioctylsulfosuccinat | American Cyanamid |
| SU-1 | Verb. 47 aus Tabelle 1 | |
| Clefoxydim | 2-{1-[2-(4-Chlorphenoxy)-propyloxyamino]-butyl}-5-tetrahydrothiopyran-3-yl-cyclohexan-1,3-dion | |
| Cinidon-ethyl | Ethyl-(Z)-2-chlor-3[2-chlor-5-(4,5,6,7tetrahydro-1,3-dioxoisoindoldion-2-yl-)-phenyl] acrylat | |

### Prüfmethoden

Der Wirkstoffgehalt an SU der Formulierungen gemäß den vorstehenden Beispielen wurde jeweils mittels quantitativer HPLC bestimmt, und wird in Tabelle 3 in Prozent angegeben.

### Versuche zur Lagerstabilität:

Zur Untersuchung der Lagerstabilität wurden Proben der jeweiligen Formulierung gemäß den Beispielen 1-9 und den Vergleichsbeispielen 1 bis 4 für eine bestimmte Zeit (14 d oder 42 d) in fest verschlossenen Glasgefäßen bei der jeweils angegebenen Temperatur (40 °C, 50 °C bzw. 54 °C) gelagert. Anschließend werden die Proben untersucht und mit dem Vergleichswert zu Beginn der Lagerung (Nullwert) verglichen. Der Wirkstoffgehalt wird als relativer Anteil des SU, bezogen auf den Nullwert (in Prozent) angegeben.Die Lagerversuche wurden in Anlehnung an die Methode CIPAC MT 46 durchgeführt. Dabei wird die Langzeitstabilität eines Produkts durch Kurzlagerung bei erhöhter Temperatur abgeschätzt.

Tabelle 3 gibt die Ergebnisse aus der Bestimmung der Lagerstabilität der hergestellten festen Mischungen aus den Beispielen 1-9 und den Vergleichsbeispielen 1-4 wieder.

Die Ergebnisse zeigen die überlegenen Eigenschaften der erfindungsgemäßen festen Mischungen.

**Tabelle 3:**

| **Bsp.- Nr.** | **Adjuvant** | **Wirkstoffgehalt in Gew.%** | **rel.Wirkstoffge halt SU nach 14 d, 54°C** |
|---|---|---|---|
| V1 | Klearfac^{R} AA-270 | 4,3 | 0 |
| V2 | Armoblem^{R} 557 | 3,9 | 13 |
| V3 | Lutensit^{R} ON 60 | 3,2 | 14 |
| V4 | Lutensol^{R}ON 30 | 7,3 | 48 |
| V5 | Lutensit^{R} A-LBN | 5 | 90 |
| 1 | Lutensit^{R}A-PS | 5,1 | 88 |
| 2 | Lutensit^{R}A-PS | 5,5 | 100 |
| V6 | Witconate^{R} 3203 | 5,5 | 93 |
| 3 | Witconate^{R} NAS 8 | 5,6 | 90 |
| 4 | Lutensit^{R}A-PS | 5,38 | 95 |
| 5 | Lutensit^{R} A-PS | 5,57 | 94¹ |
| 6 | Lutensit^{R} A-PS | 6,4 | 100 |
| 7 | Lutensit^{R} A-PS | 7,3 | 69 |

| | | | |
|---|---|---|---|
| ¹ gemessen nach 30 Tagen Lagerung bei 50 °C | | | |

## Patentansprüche

1. Feste Mischungen, enthaltend
a) einen Wirkstoff aus der Gruppe der Sulfonylharnstoffe, und
b) ein Salz einer Alkylsulfonsäure.

2. Feste Mischung nach Anspruch 1, enthaltend einen Sulfonylharnstoff der Formel I 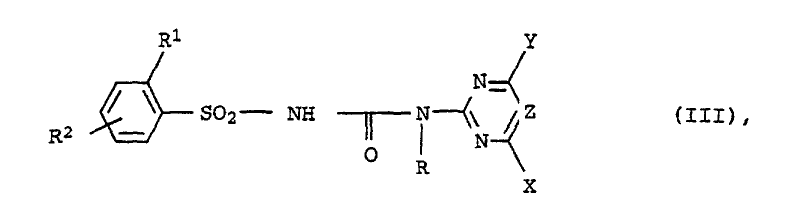 wobei die Substituenten folgende Bedeutung haben:
R¹ C₁-C₄-Alkyl, das eine bis fünf der folgenden Gruppen tragen kann: Methoxy, Ethoxy, SO₂CH₃, Cyano, Chlor, Fluor, SCH₃, S(O)CH₃;
Halogen;
eine Gruppe ER¹⁹, in der E O, S oder NR²⁰ bedeutet;
COOR¹²;
NO₂;
S(O)ₙR¹⁷, SO₂NR¹⁵R¹⁶, CONR¹³R¹⁴;
R² Wasserstoff, Methyl, Halogen, Methoxy, Nitro, Cyano, Trifluormethyl, Trifluormethoxy, Difluormethoxy oder Methylthio,
Y F, CF₃, CF₂Cl, CF₂H, OCF₃, OCF₂Cl, C₁-C₄-Alkyl oder C₁-C₄-Alkoxy;
X C₁-C₂-Alkoxy, C₁-C₂-Alkyl, C₁-C₂-Alkylthio, C₁-C₂-Alkylamino, Di-C₁-C₂-Alkylamino, Halogen, C₁-C₂-Halogenalkyl, C₁-C₂-Halogenalkoxy,
R Wasserstoff oder Methyl;
R¹⁹ C₁-C₄-Alkyl, C₂-C₄-Alkenyl, C₂-C₄-Alkinyl oder C₃-C₆-Cycloalkyl, welche 1 bis 5 Halogenatome tragen können. Ferner bedeutet R¹⁹ im Falle, daß E für O oder NR²⁰ steht, noch Methylsulfonyl, Ethylsulfonyl, Trifluormethylsulfonyl, Allylsulfonyl, Propargylsulfonyl oder Dimethylsulfamoyl;
R²⁰ Wasserstoff, Methyl oder Ethyl
R¹² eine C₁-C₄-Alkylgruppe, welche bis zu drei der folgenden Reste tragen kann: Halogen, C₁-C₄-Alkoxy, Allyl oder Propargyl;
R¹⁷ eine C₁-C₄-Alkylgruppe, welche einen bis drei der folgenden Reste tragen kann: Halogen, C₁-C₄-Alkoxy, Allyl oder Propargyl;
R¹⁵ Wasserstoff, eine C₁-C₂-Alkoxygruppe oder eine C₁-C₄-Alkylgruppe;
R¹⁶ Wasserstoff oder eine C₁-C₄-Alkylgruppe,
n 1 - 2
Z N, CH

3. Feste Mischungen nach Anspruch 1 oder 2, enthaltend einen weiteren herbiziden Wirkstoff c).

4. Feste Mischungen nach einem der Ansprüche 1 bis 3, enthaltend 0,5 bis 75 Gew.% der Komponente a).

5. Feste Mischungen nach einem der Ansprüche 1 bis 4, enthalten 1 bis 50 Gew.% der Komponente b).

6. Verfahren zur Bekämpfung von unerwünschtem Pflanzenwuchs, **dadurch gekennzeichnet, daß** man die Pflanzen und/oder die von den Pflanzen freizuhaltende Fläche mit einer herbizid wirksamen Menge einer festen Mischung gemäß Anspruch 1 behandelt.

7. Verfahren zur Herstellung von Herbizidformulierungen, **dadurch gekennzeichnet, daß** man einen Sulfonylharnstoff mit einem Salz einer Alkylsulfonsäure mischt.

## Claims

1. A solid mixture comprising
a) an active ingredient from the group of the sulfonylureas and
b) a salt of an alkylsulfonic acid.

2. A solid mixture as claimed in claim 1, comprising a sulfonylurea of the formula I 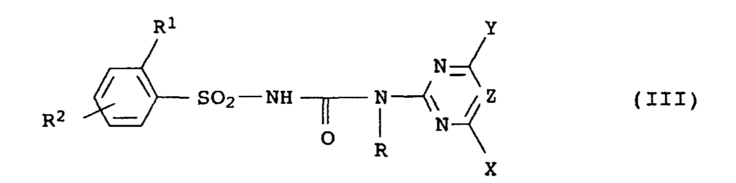 where the substituents have the following meanings:
R¹ is C₁-C₄-alkyl which can have attached to it one to five of the following groups: methoxy, ethoxy, SO₂CH₃, cyano, chlorine, fluorine, SCH₃, S(O)CH₃;
halogen;
a group ER¹⁹ where E is O, S or NR²⁰;
COOR¹²;
NO₂; S(O)ₙR¹⁷, SO₂NR¹⁵R¹⁶, CONR¹³R¹⁴;
R² is hydrogen, methyl, halogen, methoxy, nitro, cyano, trifluoromethyl, trifluoromethoxy, difluoromethoxy or methylthio,
Y is F, CF₃, CF₂Cl, CF₂H, OCF₃, OCF₂Cl, C₁-C₄-alkyl or C₁-C₄-alkoxy;
X is C₁-C₂-alkoxy, C₁-C₂-alkyl, C₁-C₂-alkylthio, C₁-C₂-alkylamino, di-C₁-C₂-alkylamino, halogen, C₁-C₂-haloalkyl, C₁-C₂-haloalkoxy,
R is hydrogen or methyl;
R¹⁹ is C₁-C₄-alkyl, C₂-C₄-alkenyl, C₂-C₄-alkynyl or C₃-C₆-cycloalkyl, which can have attached to them 1 to 5 halogen atoms; furthermore, in the event that E is O or NR²⁰, R¹⁹ is also methylsulfonyl, ethylsulfonyl, trifluoromethylsulfonyl, allylsulfonyl, propargylsulfonyl or dimethylsulfamoyl;
R²⁰ is hydrogen, methyl or ethyl;
R¹² is a C₁-C₄-alkyl group, which can have attached to it up to three of the following radicals: halogen, C₁-C₄-alkoxy, allyl or propargyl;
R¹⁷ is a C₁-C₄-alkyl group, which can have attached to it one to three of the following radicals: halogen, C₁-C₄-alkoxy, allyl or propargyl;
R¹⁵ is hydrogen, a C₁-C₂-alkoxy group or a C₁-C₄-alkyl group;
R¹⁶ is hydrogen or a C₁-C₄-alkyl group;
n is 1 - 2 and
Z is N or CH.

3. A solid mixture as claimed in claim 1 or 2, comprising a further herbicidally active ingredient c).

4. A solid mixture as claimed in any one of claims 1 to 3, comprising 0.5 to 75 % by weight of component a).

5. A solid mixture as claimed in any one of claims 1 to 4, comprising 1 to 50 % by weight of component b).

6. A method of controlling undesired vegetation, which comprises treating the plants and/or the area to be kept free of the plants with a herbicidally active amount of a solid mixture as claimed in claim 1.

7. A process for the preparation of herbicide formulations, which comprises mixing a sulfonylurea with a salt of an alkylsulfonic acid.

## Revendications

1. Mélanges solides, contenant
a) une substance active du groupe des sulfonylurées, et
b) un sel d'un acide alkylsulfonique.

2. Mélange solide selon la revendication 1, contenant une sulfonylurée de formule I 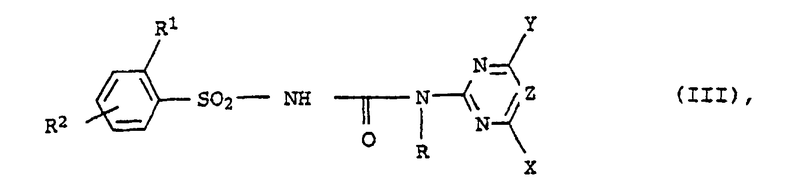 où les substituants ont la signification suivante:
R¹ alkyle en C₁-C₄, qui peut porter un à cinq des groupes suivants: méthoxy, éthoxy, SO₂CH₃, cyano, chloro, fluoro, SCH₃, S(O)CH₃;
halogéno;
un groupe ER¹⁹, dans lequel E représente O, S ou NR²⁰;
COOR¹²;
NO₂;
S(O)ₙR¹⁷, SO₂NR¹⁵R¹⁶, CONR¹³R¹⁴;
R² hydrogène, méthyle, halogéno, méthoxy, nitro, cyano, trifluorométhyle, trifluorométhoxy, difluorométhoxy ou méthylthio,
Y F, CF₃, CF₂Cl, CF₂H, OCF₃, OCF₂Cl, alkyle en C₁-C₄ ou alcoxy en C₁-C₄;
X alcoxy en C₁-C₂, alkyle en C₁-C₂, alkylthio en C₁-C₂, alkylamino en C₁-C₂, di(alkyl en C₁-C₂)amino, halogéno, halogénoalkyle en C₁-C₂, halogénoalcoxy en C₁-C₂;
R hydrogène ou méthyle;
R¹⁹ alkyle en C₁-C₄, alcényle en C₂-C₄, alcynyle en C₂-C₄ ou cycloalkyle en C₃-C₆, qui peuvent porter 1 à 5 atomes d'halogène, et en outre R¹⁹ désigne, dans le cas où E représente O ou NR²⁰, encore un méthylsulfonyle, éthylsulfonyle, trifluorométhylsulfonyle, allylsulfonyle, propargylsulfonyle ou diméthylsulfamoyle;
R²⁰ hydrogène, méthyle ou éthyle;
R¹² un groupe alkyle en C₁-C₄, qui peut porter jusqu'à trois des restes suivants: halogéno, alcoxy en C₁-C₄, allyle ou propargyle;
R¹⁷ un groupe alkyle en C₁-C₄, qui peut porter un à trois des restes suivants: halogéno, alcoxy en C₁-C₄, allyle ou propargyle;
R¹⁵ hydrogène, un groupe alcoxy en C₁-C₂ ou un groupe alkyle en C₁-C₄;
R¹⁶ hydrogène ou un groupe alkyle en C₁-C₄;
n 1 - 2
Z N, CH.

3. Mélanges solides selon la revendication 1 ou 2, contenant une autre substance à activité herbicide c).

4. Mélanges solides selon l'une des revendications 1 à 3, contenant 0,5 à 75 % en poids du composant a).

5. Mélanges solides selon l'une des revendications 1 à 4, contenant 1 à 50 % en poids du composant b).

6. Procédé pour la lutte contre la croissance des plantes indésirables, **caractérisé par le fait qu'**on trait les plantes et/ou les surfaces à rendre exemptes des plantes avec une quantité efficace du point de vue herbicide d'un mélange solide selon la revendication 1.

7. Procédé pour la préparation de formulations herbicides, **caractérisé par le fait qu'**on mélange une sulfonylurée avec un sel d'un acide acide alkylsulfonique.
